# EUROPEAN PATENT APPLICATION

(11) **EP 4 715 414 A1**
(43) Date of publication of application: **25.03.2026**
(21) Application number: 24201297.9
(22) Date of filing: 19.09.2024
(51) Int. Cl.: G01S 3/803, G01S 3/801, G01S 3/80

(54) **SIGNAL LOCALIZATION DEVICE AND METHOD FOR IDENTIFYING AN EMITTED SIGNAL LOCALIZATION**

(71) Applicant: TOYOTA JIDOSHA KABUSHIKI KAISHA, Aichi-ken, 471-8571 (JP)
(72) Inventor: OTHMEZOURI, Gabriel, 1140 BRUSSELS (BE); MERKEL, Harald, DK 6950 Ringkøbing (DK)
(74) Representative: Cabinet Beau de Loménie

(57) **Abstract**

A signal localization device (1), comprising:
a single sensor (4),
a first redirection device (21) configured to guide an emitted signal (2) to the sensor (4) through a first channel, said first channel having a first intrinsic delay and a first spatial sensitivity so as to provide the emitted signal (2) to the sensor (4) with a first delay,
a second redirection device (8) arranged to guide the emitted signal (2) to the sensor (4) through a second channel, said second channel having a second intrinsic delay and a second spatial sensitivity so as to provide the emitted signal (2) to the sensor (4) with a second delay, the first delay and the second delay being different,
the second redirection (8) device comprising a delay structure (5) configured to provide the second delay to the emitted signal as a function of a direction (3) of the emitted signal (2), and
a processing unit (6), configured to identify a localization of the emitted signal (2) as a function of the emitted signal, the first delay and the second delay.

## Description

### BACKGROUND OF THE INVENTION

### 1. Field of the invention

The present disclosure relates to signal localization and, more particularly, to a sound localization device and a method to localize a signal emitting source.

### 2. Description of Related Art

Signal localization is a fundamental task in signal processing and may be used in a wide range of applications. Conventional approach to signal localization is typically performed using a device including two or more sensors, also referred as a sensor array. In order to identify a localization of the signal source with a device using a sensor array, i.e the main direction from which the signal is received by the device including the two or more sensors of the sensor array, a cross-correlation process is used on the respective signals received by the sensors.

However, such a sensor array is fundamentally limited by the number of sensors and by the physical size of the sensor array to accurately localize the received sound. Considering that such sensor arrays could be cumbersome or even impossible to assemble and control, their utility is much reduced in situations in which the available space is limited.

Moreover, a sensor array requires a plurality of components and a corresponding processing unit which can lead to complex devices.

Thus, there is a need for a signal localization device which is simple to implement with a small size.

### SUMMARY

The present disclosure provides a signal localization device, comprising:
a single sensor,
a first redirection device configured to guide an emitted signal to the sensor through a first channel, said first channel having a first intrinsic delay and a first spatial sensitivity so as to provide the emitted signal to the sensor with a first delay,
a second redirection device arranged to guide the emitted signal to the sensor through a second channel, said second channel having a second intrinsic delay and a second spatial sensitivity so as to provide the emitted signal to the sensor with a second delay, the first delay and the second delay being different,
the second redirection device comprising a delay structure configured to provide the second delay to the emitted signal as a function of the direction of the emitted signal, and a processing unit, configured to identify a localization of the emitted signal as a function of the emitted signal, the first delay and the second delay.

In the present disclosure, single sensor implies a single data stream received by said single sensor and referring to said single sensor position. Moreover, the signal is a signal wave signal which propagates in the air or other media. Preferably, the signal is a sound signal. However, the signal could be light, radio, infrared, etc. as well as electrical or heat propagation.

First redirection device provides a first specific distribution of spatial sensitivity of the signal. Second redirection device provides a second specific distribution of spatial sensitivity of the signal. Said first and second redirection devices can be for examples funnels, horn antenna, etc. In other words, each delay applied to the signal is associated to a respective redirection device and each redirection device has a specific spatial sensitivity pattern.

Such a signal localization device, having a single sensor, has a small size and consequently does not require a large space to be used, allowing its use in a plurality of applications in which the available space is limited. Moreover, such a signal localization device is easy to implement and does not require a complex signal processing as the signal received by a single sensor is analyzed to localize the emitted signal direction.

The single sensor used in the signal localization device can be a dedicated sensor or a sensor having another primary function. In other words, the single sensor used in the signal localization device can be an already existing sensor which is used for a primary task that is not localization of sources. The signal localization device, by analyzing the signal received by the single sensor at two different reception times, allows using a single sensor having a first primary function which is not the localization of the signal to enhance said localization of the signal without requiring to add specific components for the operation of localization.

In a preferred embodiment, the emitted signal is a sound signal and the sensor is a microphone, the signal localization device being a monaural sound localization device.

In the present disclosure, the first and second channels define a respective signal guide allowing the emitted signal to be received by the sensor with two distinct delays, a first delay being defined by the first channel and a second delay being defined by the second channel, including the delay provided by the delay structure which is depending on the signal direction. In other words, the emitted signal is received by the sensor both from the first channel, without having undergone any transformation or manipulation by the delay structure, and from the second channel, with a delay applied by the delay structure.

Preferably, the sensor is arranged at least partially in front of an output passage of the delay structure, the sensor, via its part located in front of the output port, receives the emitted signal from the output port. Said emitted signal received from the output port has therefore passed through the delay structure and has been manipulated by the delay structure.

In other words, a signal received by the sensor is received both from outside of the delay structure and from the delay structure through the output port with two distinct receiving times.

The delay structure configured to define delays manipulates signals to apply delays to signals passing through the delay structure depending on the signal direction. This means that the emitted signal received by the sensor through the second channel, and therefore through the delay structure, has a profile which is similar to the profile of the emitted signal received through the first channel with a delay in reception defined thanks to the delay structure and therefore to the signal direction. Thus, depending on the delay which has been applied to the emitted signal thanks to the second channel compared to the emitted signal received through the first channel, the processing unit can identify the path through which the emitted signal has been through the delay structure. By identifying the path through the delay structure covered by the emitted signal, the processing unit can identify the direction of the emitted signal.

Thanks to these features, the signal localization device can identify the emitted signal localization with a single sensor, providing a space-saving and simple signal localization device.

According to embodiments of the invention, the signal localization device can have the following features, alone or in combination.

According to an embodiment, the delay structure is configured to provide a plurality of delays, each delay of said plurality of delays corresponding to a respective signal direction.

According to an embodiment, the delays of the plurality of delays are at least two wavelengths of the emitted signal.

According to an embodiment, the processing unit is configured to define a reception delay between a first receiving time and a second receiving time, the first receiving time corresponding to the reception of the emitted signal by the sensor through the first channel, the second receiving time corresponding to the reception of the emitted signal by the sensor through the second channel, the processing unit being configured to identify the emitted signal localization as a function of said reception delays and the delays defined by the delay structure.

According to an embodiment, the processing unit is configured to identify the emitted signal localization with Auto-correlation processing.

According to an embodiment, the processing unit is configured to identify the emitted signal localization with deep-learning processing.

According to an embodiment, the delay structure comprises a selector configured to define at least a first configuration and a second configuration of the delay structure, the delays provided by the delay structure in the first configuration being different from the delays provided by the delay structure in the second configuration for at least two directions.

According to an embodiment, the delay structure comprises a filter configured to change emitted signal in the delay structure.

According to an embodiment, the second redirection device comprises an input port configured to receive the emitted sound signal and guide said emitted signal to the sensor through the delay structure.

According to an embodiment, the invention also provides a method for identifying an emitted signal localization, the method comprising:
receiving at a first receiving time the emitted signal with a sensor through a first channel having a first intrinsic delay and a first spatial sensitivity so as to provide the emitted signal to the sensor with a first delay,
receiving at a second receiving time the emitted signal with the sensor through a second channel having a second intrinsic delay and a second spatial sensitivity so as to provide the emitted signal to the sensor with a second delay, the first delay and the second delay being different" and
identify the emitted signal localization as a function of the emitted signal, the first delay and the second delay

### BRIEF DESCRIPTION OF THE DRAWINGS

Features, advantages, and technical and industrial significance of exemplary embodiments of the disclosure will be described below with reference to the accompanying drawings, in which like signs denote like elements, and wherein:
- FIG. 1 shows a schematic example of monaural sound localization device according to the disclosure receiving a sound signal;
- FIG. 2 shows a perspective view of an example of delay structure which can be used in the monaural sound localization device of figure 1;
- FIG. 3 shows an upper view of the delay structure figure 2;
- FIG. 4 is a schematic representation of an example sound signal passage through a delay structure;
- FIG. 5 is a graph showing profiles of the first portion of a sound signal directly received by the microphone and a second portion of said sound signal received from the delay structure from a first direction;
- FIG. 6 is a graph showing profiles of the first portion of a sound signal directly received by the microphone and a second portion of said sound signal received from the delay structure from a second direction;
- FIG. 7 is a schematic representation of a delay structure comprising a selector according to an embodiment of the disclosure;
- FIG. 8 is a schematic representation of a delay structure comprising a filter according to an embodiment of the disclosure;

### DETAILED DESCRIPTION OF EMBODIMENTS

Embodiments of the present disclosure will be described in detail below with reference to the drawings. The same or corresponding parts are denoted by the same signs throughout the drawings, and description thereof will not be repeated. The embodiments shown on these figures are related to a monaural sound localization of a sound signal but the invention could be applied with any wave like signal localization.

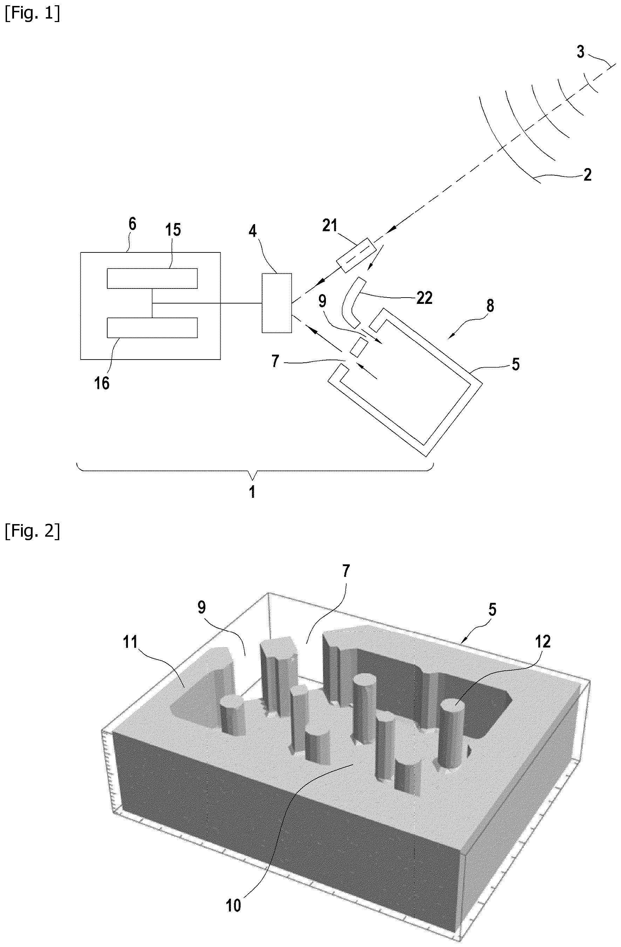

FIG. 1 shows an example of sound localization device 1 according to the invention receiving a sound signal 2 from a direction 3. The sound localization device 1 comprises a microphone 4, a first redirection device 21, a second redirection device 8 and a processing unit 6. The second redirection device 8 includes a delay structure 5.

In the embodiment shown on figure 1, the microphone 4 is arranged partially in front of an output port 7 of the delay structure 5.

When the sound signal 2 is emitted, said sound signal 2 is received both by the first redirection device 21 and the second redirection device 8. Each redirection device 8, 21 defines a respective channel guiding the signal 2 to the microphone 4 with a respective delay.

First redirection device 21 and second redirection device 8 are devices that provide a specific distribution of spatial sensitivity. In other words, each redirection device 8, 21 has its own specific delay and a specific spatial sensitivity pattern.

In order to guide the signal 2 with a respective delay, the first redirection device 21 and the second redirection device 8 can have an ear shaped, a parabolic shape, a horn antenna shape or any other shape allowing to guide the signal 2. Moreover, the delay applied by each redirection device 21, 8 is also depending on the physical localisation of said redirection device 21 ,8, i.e. its input localisation and the guiding path.

In the embodiment shown on figure 1, the first redirection device 21 is a funnel aligned with the direction 3 such that the sound signal is directly received by the microphone 4. In the present description, "directly" means that the sound signal 2 is received by the microphone 4 without delay and without passing through the delay structure 5, and consequently without being manipulated by said delay structure 5. Thus, in the embodiment shown on figure 1, a first channel defined by the first redirection device 21 and guiding the sound signal 2 to the microphone applies a zero delay to the sound signal 2. However, it is clear that with a different direction 3, the sound signal 2 would be guided to the microphone 4 through the first channel defined by the first redirection device 21 with another delay.

The second redirection device 8 guide comprises a second funnel 22 which guide the sound signal 2 from an input of the funnel 22 to an input port 9 of the delay structure 5. As the microphone 4 is arranged partially in front of the output port 7, the sound signal 2 guided thanks to the second funnel 22 to the delay structure 5 is received by the microphone 4 after being passed through the delay structure 5.

As schematically shown on figure 1, the distance covered by the sound signal 2 to reach the microphone 4 through the first channel defined by the first redirection device 21 and thus without passing through the delay structure 5 is smaller than the distance covered by the sound signal 2 to reach said microphone 4 through the second redirection device 8 including the delay structure 5. Indeed, the delay structure 5 is configured to increase the covered distance required to reach the microphone 4 for the sound signal 2 compared to the sound signal 2 directly received by the microphone 4. By increasing the distance required to reach the microphone 4, the delay structure 5 applies a delay in time reception to said the sound signal 2 passing through the delay structure 5. In other words, the sound signal 2 is received by the microphone 4 directly at a first receiving time corresponding to the delay applied thanks to the first channel defined by the first redirection device 21 and, at a second receiving time, after a delay corresponding to the time needed for said sound signal 2 to pass through the second channel defined by the second redirection device 8 including the delay structure 5.

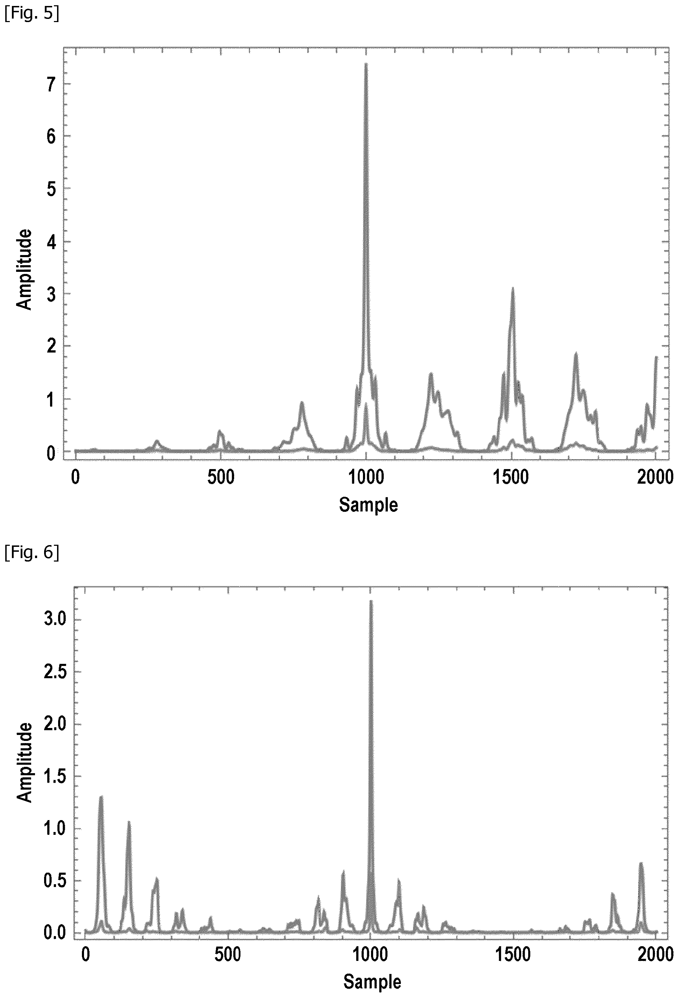

As explained below in view of figures 5 and 6, the sound signal 2 directly received by the microphone 4 through the firs channel defined by the first redirection device 21 has a similar profile to the profile of the sound signal 2 passed through the second channel defined by the second redirection device 8 including the delay structure 5, which means that the sound signal 2 passed through the second redirection device 8 shows amplitude peaks for the same frequencies than the sound signal 2 directly received by the microphone 4 through the first channel. However, the delay applied by the delay structure 5 leads to differences in amplitude between said profiles.

In fact, the delay structure 5 defines a plurality of delays as a function of the direction 3 of the sound signal 2.

The delays defined by the delay structure 5 are different from each other, which means that each delay defined by the delay structure 5 occurs exactly once and that the set of delays are no integer multiples of each other. This also means that for each delay, i.e for each incoming direction of the sound signal 2 and corresponding modification of the profile of the sound signal 2, the profile of the sound signal 2 received by the microphone 4 through the second redirection device 8 is different in at least one region of said profile than for profiles corresponding to other delays, and therefore corresponding to other directions.

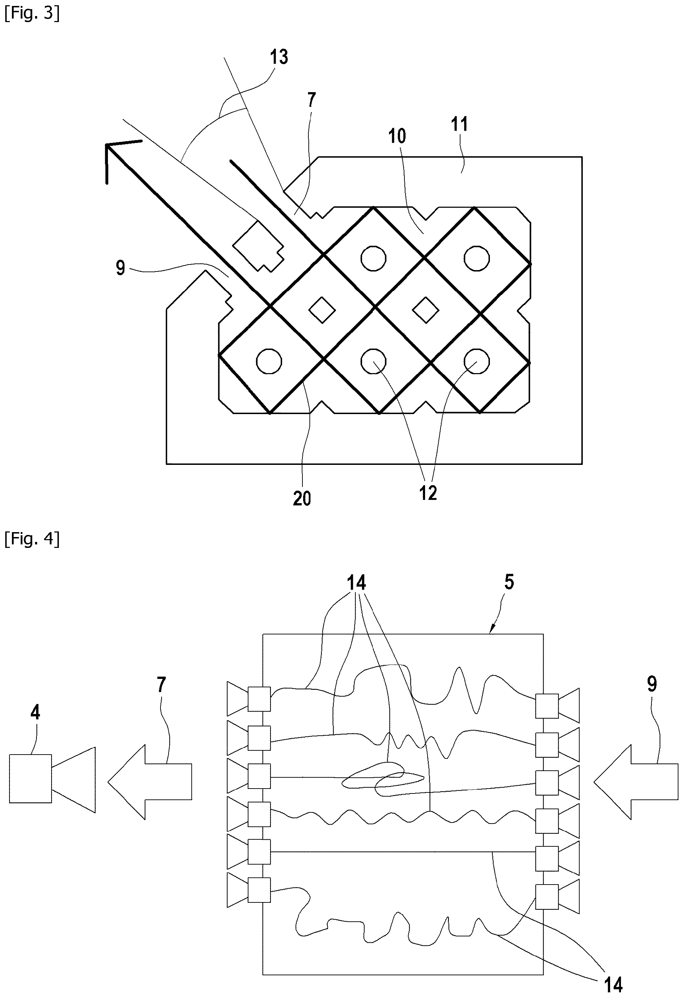

Figures 2 and 3 show an embodiment of a delay structure 5 defining such delays as a function of the sound signal 2 direction 3.

In this embodiment, the delay structure 5 comprises a bottom 10, walls 11 and pillars 12.

As explained above, the second funnel 22 guides the sound signal 2 to the input port 9 of the delay structure 5. To ensure the sound signal 2 propagation through the delay structure 5, the second funnel guides the sound signal 2 to provide said sound signal 2 within an incoming angle 13 through the input port 9 as shown on figure 3.

The bottom 10 and the walls 11 of the delay structure 5 define an interior space of the delay structure 5 in which the sound signal 2 can pass through. The pillars 12 extend through said interior space. These pillars 12 may have different shape in cross section so as to define different reflection paths. These pillars 12 serve as separators for the sound paths and reduce cross talk with the folded acoustic waves.

The walls 11, the bottom 10 and the deflector pillars 12 define together a plurality of paths for a sound signal 2 passing through the delay structure 5. Each path of this plurality of paths is defined by the delay structure 5 as a function of the direction of the incoming signal 2.

Figure 3 shows an example in which, in the delay structure 5, the sound signal 2 path 20 is folded several times to yield the desired delay length for the sound signal. Ideally the sound wave is focused into the delay line with a e.g. Gaussian beam waist localized in its center.

Depending on the sound signal 2 incoming direction 3, said sound signal 2 propagates through a respective path along the delay structure 5. In other words, the delay structure 5 defines for each incoming direction 3 of a sound signal 2 a corresponding and single path to the output port 7. By defining a plurality of paths as a function of the incoming direction 3 of the sound signal 2, the delay structure 5 defines for each incoming direction of the sound signal a respective delay which is applied to said incoming sound signal 2 and is corresponding to the requested time for said sound signal to pass through the delay structure 5 along the corresponding path.

In other words, the delay structure 5 defines for each sound signal direction 3 a respective delay corresponding to the time needed for said sound signal to travel through the delay structure 5 from the input port 9 to the output port 7.

Considering figure 1, this means that the microphone 4 receives the sound signal 2 both directly, i.e. without delay, through the first channel defined by the first redirection device 21 and through the second redirection device 8 including the delay structure, i.e. with a delay defined by the second funnel 22 and the delay structure 5 as a function of the direction 3 of the sound signal 2.

Figure 4 shows schematically a plurality of paths 14 according to the direction of the sound signal 2 passing through the delay structure 5. On this figure 4, each sound signal 2 passing through the delay structure 5 has a respective incoming direction. Therefore, each sound signal 2 passing through the delay structure 5 has a respective path 14 inside the delay structure 5, said respective path corresponding to the distance covered by the sound signal 2 to reach the output port 7 and defining a respective delay to the sound signal 2.

As shown on figure 4, each path 14 has a specific length, defining a corresponding delay for the sound signal 2. Thus, depending on the incoming direction of the sound signal 2, the part of the microphone 4 arranged in front of the output port 7 receives of the sound signal 2 with a delay as a function of the incoming direction of the sound signal 2.

As the delay structure 5 defines a plurality of delays as a function of the incoming direction 3, the sound signal 2 passing through the delay structure 5 has a specific profile compared to the sound signal 2 directly received by the microphone 4.

Figures 5 shows profiles of a sound signal 2 having a first incoming direction and received by the microphone 4 at a first receiving time, for instance directly and without delay; and at a second receiving time through the delay structure 5 and figure 6 shows profiles of a sound signal having a second incoming direction and received by the microphone 4 at a third receiving time, for instance directly and without delay; and at a fourth receiving time through the delay structure 5.

As shown on these figures 5 and 6, the profiles of the sound signal 2 passed through the delay structure 5 and received by the microphone 4 are modified compared to the profiles of said sound signal 2 received directly by the microphone 4. Indeed, the profile of the sound signal 2 passed through the delay structure 5 shows amplitude peaks modified compared to the sound signal 2 directly received by the microphone 4. These differences results from the delay applied by the delay structure 5 to the sound signal 2.

However, as shown by comparing figure 5 and 6, the modification of the profile of the sound signal 2 is different depending on the incoming direction 3 of the sound signal 2. The profile of the sound signal passed through the delay structure does not show the same amplitude peaks modifications on figure 5 and figure 6.

As the delay structure 5 defines a plurality of delays as a function of the incoming direction 3 of the sound signal 2, it is possible to identify the direction of a sound signal 2 as a function of the profiles of the sound signal 2. Especially, it is possible to identify the incoming direction 3 of the sound signal by analyzing the modifications between the profile of the sound signal 2 received at the first receiving time and the profile of the sound signal 2 received at the second receiving time, i.e passed through the delay structure 5.

As shown on figure 1, the sound signal localization 1 comprises a processing unit 6. The processing unit 6 includes a processor 15 and a data storage unit 16. The data storage unit 16 stores data on the first redirection device 21 and the second redirection device 8. These data include the delays provided by the first channel and the delays provided by the second channel, including the delays provided by the delay structure 5 as a function of the directions of the signal. These data on the delay structure 5 include, for each incoming direction of a sound signal 2, the corresponding profile modifications applied to the sound signal 2 by the delay structure 5.

When the microphone 4 receives a sound signal 2, the processing unit 6 analyzes both the sound signal 2 received through the first channel, ie. directly in the embodiment shown on figure 1, and received through the second channel. The processing unit 6 can identify the incoming direction of the sound signal 2 for instance using autocorrelation between both profiles of the sound signal 2, the profile corresponding to the sound signal 2 which is directly received by the microphone 4 without being manipulated, and the profile corresponding to the sound signal 2 received by the microphone 4 and which has been modified thanks to the delay structure 5. As the modification is depending on the incoming direction of the sound signal 2 in the delay structure 5, by identifying said modification applied to the sound signal 2 when passing through the delay structure 5, the processing unit can identify the corresponding incoming direction of sound signal 2. This identification can be made using for instance autocorrelation processing, deep learning processing, or any other analyzing methods.

Thanks to the above-described sound localization device 1, it is therefore possible to identify the direction of a sound signal 2 received by said sound localization device 1 using a single microphone 4 and a simple processing unit 6 which does not require a complex algorithm for detecting the incoming direction of the received sound signal 2.

The delay structure 5 can have different shapes, the main point being that said delay structure 5 defines a plurality of delays for different incoming directions of the sound signal 2. In not shown embodiments, the delay structure is a spiral delay lines, an acoustic guide delay lines, a folded delay lines or any other delay structure 5 defining delays as a function of the incoming direction of the sound signal.

The longer the delay line differences can be made, the easier the signal processing becomes. Indeed, a longer delay mean more specific modifications of the profile of the sound signal 2.

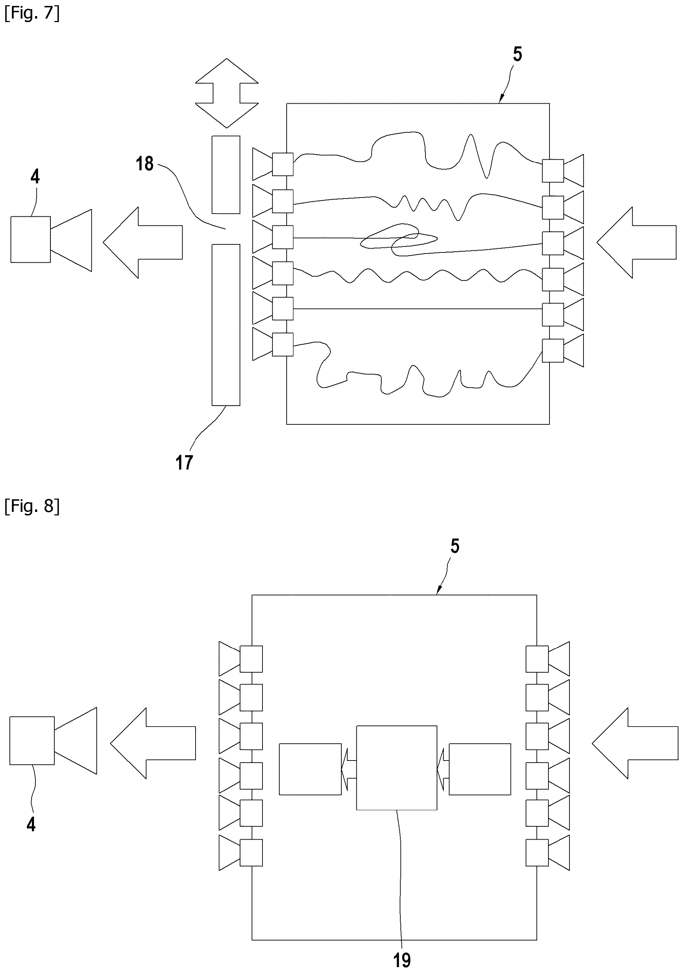

In an embodiment shown on figure 7, the delay structure 5 further comprises a selector 17. The selector 17 include a passage 18 which can be moved between the output port 7 and the part of the microphone 4 arranged in front of said output port 7. By modifying the position of the passage 18, it is possible to modify the delay path of the sound signal 2, i.e. selectively define each delay with a certain weight function. As explained above, more important delays mean more specific modifications of the profile of the sound signal 2 and therefore easier identification of the incoming direction of the sound signal 2.

In an embodiment shown on figure 8, the delay structure 5 further comprises a filter 19. This filter 19 can provide any kind of manipulation on the sound signal passing through the delay structure 5. For instance, this filter 19 can reduce noises or modify the sound signal for a selected frequency.

According to an embodiment, at least one delay defined by the delay structure 5 modifies the profile of the sound signal 2 with an amplitude modification significantly smaller, for instance two or three times smaller, than all the amplitude modifications linked to other delays. This yields a "silent spot" on the microphone signal and allows to synchronize the detection algorithm with the mechanical means' position.

In an embodiment, an acoustic signal low in amplitude is emitted by an emitter towards the microphone 4, said emitter being linked to the selector 17. This allows to synchronize the detection algorithm with the selector 17 and the passage 18 position.

This acoustic signal can be made in the form of a quasi-random noise sound signal which contents is only known to the processing unit, this acoustic signal having localizable patterns to calculate delays. In other words, no audible interference is generated. The advantage is that the signal processing and localization algorithm remains locked even during silent periods where no signal is otherwise available.

In the case of a processing unit 6 analyzing the profile of the sound signal with a deep learning process, the position information of the selector 17 and the position of the passage 18 are preferably input to the data storage unit 16 to be used in the deep learning process.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A signal localization device (1), comprising:
a single sensor (4),
a first redirection device (21) configured to guide an emitted signal (2) to the sensor (4) through a first channel, said first channel having a first intrinsic delay and a first spatial sensitivity so as to provide the emitted signal (2) to the sensor (4) with a first delay,
a second redirection device (8) arranged to guide the emitted signal (2) to the sensor (4) through a second channel, said second channel having a second intrinsic delay and a second spatial sensitivity so as to provide the emitted signal (2) to the sensor (4) with a second delay, the first delay and the second delay being different,
the second redirection (8) device comprising a delay structure (5) configured to provide the second delay to the emitted signal as a function of a direction (3) of the emitted signal (2), and
a processing unit (6), configured to identify a localization of the emitted signal (2) as a function of the emitted signal, the first delay and the second delay.

2. The signal localization device (1) according to claim 1, wherein the delay structure (5) is configured to provide a plurality of delays, each delay of said plurality of delays corresponding to a respective signal direction.

3. The signal localization device according to claim 2, wherein the delays of the plurality of delays are at least two wavelengths of the emitted signal (2).

4. The signal localization device according to claim 2 or 3, wherein the processing unit (6) is configured to define a reception delay between a first receiving time and a second receiving time, the first receiving time corresponding to the reception of the emitted signal (2) by the sensor (4) through the first channel, the second receiving time corresponding to the reception of the emitted signal (2) by the sensor (4) through the second channel, the processing unit (6) being configured to identify the emitted signal (2) localization as a function of said reception delays and the delays defined by the delay structure (5).

5. The signal localization device (1) according to any of the preceding claims, wherein the processing unit (6) is configured to identify the emitted signal (2) localization with Auto-correlation processing.

6. The signal localization device (1) according to any of the preceding claims, wherein the processing unit (6) is configured to identify the emitted signal localization with deep-learning processing.

7. The signal localization device (1) according to any of the preceding claims, wherein the delay structure (5) comprises a selector (25) configured to define at least a first configuration and second configuration of the delay structure (5), the delays provided by the delay structure (5) in the first configuration being different from the delays provided by the delay structure (5) in the second configuration for at least two directions.

8. The signal localization device (1) according to any of the preceding claims, the delay structure (5) comprising a filter (27) configured to change the emitted signal in the delay structure.

9. The signal localization device (1) according to any of the preceding claims, the second redirection device comprises an input port configured to receive the emitted sound signal (2) and guide said emitted signal to the sensor through the delay structure.

10. A method for identifying an emitted signal (2) localization, the method comprising:
receiving at a first receiving time the emitted signal (2) with a sensor (4) through a first channel having a first intrinsic delay and a first spatial sensitivity so as to provide the emitted signal to the sensor (4) with a first delay,
receiving at a second receiving time the emitted signal (2) with the sensor (4) through a second channel having a second intrinsic delay and a second spatial sensitivity so as to provide the emitted signal to the sensor (4) with a second delay, the first delay and the second delay being different from each other, and
identify the emitted signal (2) localization as a function of the emitted signal, the first delay and the second delay.

## Amended claims

### Amended claims in accordance with Rule 137(2) EPC.

1. A signal localization device (1), comprising:
a single sensor (4),
a first redirection device (21) configured to guide an emitted signal (2) to the sensor (4) through a first channel, said first channel having a first intrinsic delay and a first spatial sensitivity so as to provide the emitted signal (2) to the sensor (4) with a first delay,
a second redirection device (8) arranged to guide the emitted signal (2) to the sensor (4) through a second channel, said second channel having a second intrinsic delay and a second spatial sensitivity so as to provide the emitted signal (2) to the sensor (4) with a second delay, the first delay and the second delay being different,
the second redirection (8) device comprising a delay structure (5) configured to provide the second delay to the emitted signal as a function of a direction (3) of the emitted signal (2), and
a processing unit (6), configured to identify a localization of the emitted signal (2) as a function of the emitted signal, the first delay and the second delay
**characterized in that**
the delay structure (5) further comprises a selector (17), the selector (17) including a passage (18) which can be moved between an output port (7) and a portion of the sensor (4) located in front of the output port (7) of the delay structure (5), the selector (17) being linked to an emitter, said emitter being configured to emit an acoustic signal low in amplitude towards the sensor (4), said acoustic signal being made in the form of a quasi-random noise acoustic signal which content is known only by the processing unit (6), and said acoustic signal having a localizable pattern to calculate delays.

2. The signal localization device (1) according to claim 1, wherein the delay structure (5) is configured to provide a plurality of delays, each delay of said plurality of delays corresponding to a respective signal direction.

3. The signal localization device according to claim 2, wherein the delays of the plurality of delays are at least two wavelengths of the emitted signal (2).

4. The signal localization device according to claim 2 or 3, wherein the processing unit (6) is configured to define a reception delay between a first receiving time and a second receiving time, the first receiving time corresponding to the reception of the emitted signal (2) by the sensor (4) through the first channel, the second receiving time corresponding to the reception of the emitted signal (2) by the sensor (4) through the second channel, the processing unit (6) being configured to identify the emitted signal (2) localization as a function of said reception delays and the delays defined by the delay structure (5).

5. The signal localization device (1) according to any of the preceding claims, wherein the processing unit (6) is configured to identify the emitted signal (2) localization with Auto-correlation processing.

6. The signal localization device (1) according to any of the preceding claims, wherein the processing unit (6) is configured to identify the emitted signal localization with deep-learning processing.

7. The signal localization device (1) according to any of the preceding claims, wherein the selector (25) is configured to define at least a first configuration and second configuration of the delay structure (5), the delays provided by the delay structure (5) in the first configuration being different from the delays provided by the delay structure (5) in the second configuration for at least two directions.

8. The signal localization device (1) according to any of the preceding claims, the delay structure (5) comprising a filter (27) configured to change the emitted signal in the delay structure.

9. The signal localization device (1) according to any of the preceding claims, the second redirection device comprises an input port configured to receive the emitted sound signal (2) and guide said emitted signal to the sensor through the delay structure.

10. A method for identifying an emitted signal (2) localization, the method comprising:
receiving at a first receiving time the emitted signal (2) with a sensor (4) through a first channel having a first intrinsic delay and a first spatial sensitivity so as to provide the emitted signal to the sensor (4) with a first delay,
receiving at a second receiving time the emitted signal (2) with the sensor (4) through a second channel having a second intrinsic delay and a second spatial sensitivity so as to provide the emitted signal to the sensor (4) with a second delay, the first delay and the second delay being different from each other, and
identify the emitted signal (2) localization as a function of the emitted signal, the first delay and the second delay,
**characterized in that** the method comprises
emitting by a emitter an acoustic signal low in amplitude towards the sensor (4), said acoustic signal being made in the form of a quasi-random noise acoustic signal which content is known only by a processing unit (6), said processing unit identifying the emitted signal (2) localization, said acoustic signal having a localizable pattern to calculate delays, the emitter being linked to a selector (17) of a delay structure (5), the selector (17) including a passage (18) which can be moved between an output port (7) of the delay structure (5) and a portion of the sensor (4) located in front of the output port (7) of the delay structure (5).
